# EUROPÄISCHE PATENTSCHRIFT

(11) **EP 0 966 345 B1**
(45) Veröffentlichungstag und Bekanntmachung des Hinweises auf die Patenterteilung: **10.09.2003**
(21) Anmeldenummer: 98910668.7
(22) Anmeldetag: 14.02.1998
(51) Int. Cl.: B29C 33/52, B29C 33/38

(54) **VERFAHREN ZUM HERSTELLEN VON HOHLKÖRPERN AUS KUNSTSTOFF**
PROCESS FOR MANUFACTURING HOLLOW PLASTIC OBJECTS
PROCEDE DE FABRICATION DE CORPS CREUX EN MATIERE PLASTIQUE

(30) Priorität: 13.03.1997 DE 19710253
(43) Veröffentlichungstag der Anmeldung: 29.12.1999
(73) Patentinhaber: FILTERWERK MANN + HUMMEL GmbH, 71631 Ludwigsburg (DE)
(72) Erfinder: BARTEL, Walther, D-70188 Stuttgart (DE); CEDZICH, Wolfgang, D-71686 Remseck (DE); VACULIK, Robert, D-71672 Marbach (DE); VEIGEL, Richard, D-71732 Tamm (DE)
(74) Vertreter: Voth, Gerhard, Dipl.-Ing.
(86) Internationale Anmeldenummer: EP9800843
(87) Internationale Veröffentlichungsnummer: WO98040195

(56) Entgegenhaltungen:
- EP-A- 0 663 276
- DE-A- 2 157 132
- DE-A- 4 121 441
- DE-A- 19 530 254
- DE-C- 4 317 061
- GB-A- 2 258 839
- GB-A- 2 260 933
- JP-A- 6 218 735
- ANDERS S ET AL: "HOLLOW BODIES MADE FROM ENGINEERING THERMOPLASTICS MANUFACTURED BY INJECTION MOULDING" KUNSTSTOFFE EUROPE, Nr. 1, 1.April 1991, Seiten 68-70, 72 - 75, XP000288686
- "SOLUBLE CORES SMASH MOULDING LIMITATIONS" EUREKA (INC. ENGINEERING MATERIALS AND DESIGN), Bd. 11, Nr. 4, 1.April 1991, Seiten 28-29, 31, XP000241922

## Beschreibung

Die Erfindung betrifft ein Verfahren zum Herstellen von Körpern aus Kunststoff nach dem Oberbegriff des unabhängigen Anspruchs 1.

Aus der FR-PS 1 366 921 ist ein Verfahren zum Herstellen von durch Spritzguß hergestellter thermoplastischer Teile mit wenigstens einer Öffnung an einem Hohlraum bekannt. Hierzu wird das geschmolzene thermoplastische Material in eine Gießform geschossen, die aus widerstandsfähigem, gut wärmeleitendem Material besteht und in der wenigstens ein Kern vorgesehen ist, der aus einem harten Material besteht und widerstandsfähig ist gegen Durchbiegung und Verformung beim Spritzgießen, aber zu schmelzen beginnt bei einer Temperatur, die zwischen der Verformungstemperatur und der Wiedererweichungstemperatur des thermoplastischen Materials liegt. Nach dem Spritzguß wird das Formteil mit dem Kern auf eine Temperatur erhitzt, die zwischen der Verformungstemperatur und der Erweichungstemperatur des Formteils liegt, damit der Kern ausschmilzt, ohne daß das thermoplastische Material schmilzt, um so den Kern aus dem Gußstück zu entfernen. Als Material für die wiederaufschmelzbaren Kerne wird eine Legierung aus Wismut und Zinn genannt. Das ausgeschmolzene Metall ist wieder verfügbar und wird erneut dem Gießprozeß zugeführt.

Es ist weiterhin aus der DE-OS 26 28 390 ein Verfahren und eine Vorrichtung zur Herstellung eines oder mehrerer hohler Sandkerne für Gießformen bekannt. Diese sogenannten Schalenkerne werden dadurch hergestellt, daß thermohärtende Bindemittel mit Sand vermischt werden. Dieser Sand wird in erhitzte Kernkästen geschüttet und nach dem Härten der Kernoberfläche der gesamte Kernkasten um 180 ° gedreht und der überschüssige, noch nicht erhärtete Sand ausgeschüttet. Auf diese Weise erhält man Hohlkerne, die wegen des geringeren Materials und der schnellen Herstellung wirtschaftlicher sind als Vollkerne.

Ein Nachteil des bekannten Standes der Technik liegt darin, daß zum einen Vollkerne einen hohen Materialeinsatz erfordern, zum anderen die Anwendung von Hohlkernen insbesondere bei der Verwendung von Metall als Kernmaterial aufwendig ist und dabei nicht gewährleistet werden kann, daß eine gleichmäßige Wandstärke eingehalten wird.

Aus der Veröffentlichung "Kunststoffe Europe", April 1991, Seite 68, ist ein Verfahren zur Herstellung von Schmelzkernen bekannt. Darin wird erwähnt, dass der Schmelzkern aus einzelnen Teilen zusammengesetzt werden kann. Problematisch ist dieses Zusammensetzen von Schmelzkernen durch Ungenauigkeiten, die dazu führen, dass die Umspritzung mit Kunststoff zu unregelmäßigen Oberflächen führt.

Aus der DE 43 17 061 ist ein Schmelzkern aus einer niedrig schmelzenden Metalllegierung zur Erzeugung eines Hohlraums bekannt. Dieser Schmelzkern weist eine Öffnung auf, die mit einem separat erzeugten Deckel verschlossen werden kann. Die Öffnung ist fertigungstechnisch bedingt. Das Verschließen dieser Öffnung mit dem Deckel erfordert einen zusätzlichen Arbeitsgang.

Die GB-A 2 260 933 beschreibt die Herstellung von Kunststoffartikeln mit einem Kern aus Halbschalen. Diese Halbschalen werden mit einem Laserstrahl miteinander verschweißt. Dieses Verfahren ist sehr aufwendig und kostenintensiv.

Aus der Zeitschrift "Engineering Meterials & Design" April 1991, Seite 28, ist ein Verfahren bekannt, bei dem zwei Schalen zur Bildung eines Hohlraums miteinander verschweißt werden. Auch dieses Verfahren ist aufwendig und erfordert einen zusätzlichen Arbeitsgang.

Die JP-A-06218735 beschreibt die Abstützung von zwei Halbschalen über Kugeln, wobei die Kugeln selbst miteinander verbunden werden oder ebenfalls aus Halbschalen gebildet werden. Auch dieses Verfahren stellt kein wirtschaftliches Herstellverfahren für die Herstellung von thermoplastischen Kunststoffteilen dar.

Der Erfindung liegt die Aufgabe zugrunde, die genannten Nachteile zu vermeiden und ein Verfahren zum Herstellen von Körpern aus Kunststoff zu schaffen, welches bei geringem Materialeinsatz eine hohe Genauigkeit der Kerne und damit auch des hergestellten Bauteils ermöglicht.

Diese Aufgabe wird ausgehend von dem Oberbegriff des unabhängigen Anspruchs 1 durch dessen kennzeichnenden Merkmale gelöst.

Es ist zwar aus der DE 41 21 441 ein Verfahren zum Herstellen eines hohlen Kunststofferzeugnisses bekannt, bei welchem Halbschalen bzw. Hälften eines Kerns aus wasserlöslichem Harz hergestellt werden. Diese Hälften müssen jedoch zusätzlich mit einem wasserbeständigen Harz überspritzt werden. Nach dem Herstellen des hohlen Kunststofferzeugnisses wird der wasserunbeständige Harz herausgewaschen, wobei der wasserbeständige Harz in dem Kunststofferzeugnis verbleibt.

Der Vorteil der Erfindung liegt demgegenüber darin, daß die Teilschalen aus Metall ein nahtloses Miteinanderverbinden ermöglichen und zusätzliche Elemente oder ein zusätzliches Umspritzen oder Umhüllen nicht erforderlich wird.

Gemäß der Erfindung sind die Teilschalen über einen Hinterschnitt nach Art einer Schnappverbindung gegeneinander zu fixieren. Selbstverständlich läßt sich das Metall der Teilschalen zusätzlich auch miteinander verschweißen oder verkleben.

Sofern gewünscht, können die Teilschalen nach dem Zusammenfügen mit einem Lack oder einer aushärtbaren Flüssigkeit besprüht oder ummantelt werden. Diese Schicht hat die Aufgabe, nach dem Ausschmelzen des Kerns aus dem Kunststoffkörper die Widerstandsfähigkeit oder die Oberfläche des Kunststoffkörpers zu verbessern.

Sofern die Halb- oder Teilschalen einen sehr großen inneren Hohlraum aufweisen, besteht die Möglichkeit, eine Abstützung durch eine innere Struktur vorzunehmen. Diese Struktur besteht selbstverständlich aus dem Material der Kerne und wird beim Schmelzen der Kerne aus dem Kunststoffhohlkörper entfernt.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Ausführungsbeispiels dargestellt. Es zeigt
- Figur 1: ein Motorsaugrohr, welches in Schmelzkerntechnik hergestellt wurde,
- Figur 2: ein aus mehreren Halbschalen zusammengesetzter Kern,
- Figur 3: einen Querschnitt durch einen Halbschalenkern,
- Figur 4: ein Werkzeug zur Herstellung der Halbschalen.

Ein Motorsaugrohr oder Ansaugrohr 10 für eine Brennkraftmaschine wird aus einem thermoplastischen Kunststoff hergestellt. Das Ansaugrohr 10 besteht aus einem Luftsammelraum 11, dem die von einem hier nicht dargestellten Filterelement gefilterte Reinluft zugeführt wird. Von diesem Luftsammelraum 11 erstrecken sich Einzelsaugrohre 12, 13, 14, 15, 16, 17 zu einem die Einzelsaugrohre verbindenden Anschlußflansch 18. Im Anschlußflansch befinden sich die Öffnungen 19, 20, 21, 22, 23, 24 für Einspritzdüsen sowie Befestigungsöffnungen.

Die Verfahrensschritte bei der Herstellung eines solchen Ansaugrohres sind das Herstellen des Kerns in einem Niederdruckverfahren aus einer Zinn-Wismut-Legierung. Dieser Kern wird aus dem Gießwerkzeug genommen und in eine Spritzgießmaschine eingelegt. Nach dem Umspritzen des Kerns mittels des thermoplastischen Kunststoffes erfolgt ein Ausschmelzen des Kerns und ein Auswaschen des Kunststoffbauteils. Ein solcher Kern wiegt für die Herstellung eines aus sechs Einzelsaugrohren bestehenden Ansaugrohren zwischen 40 und 50 kg, dies erschwert natürlich die Handhabung beträchtlich.

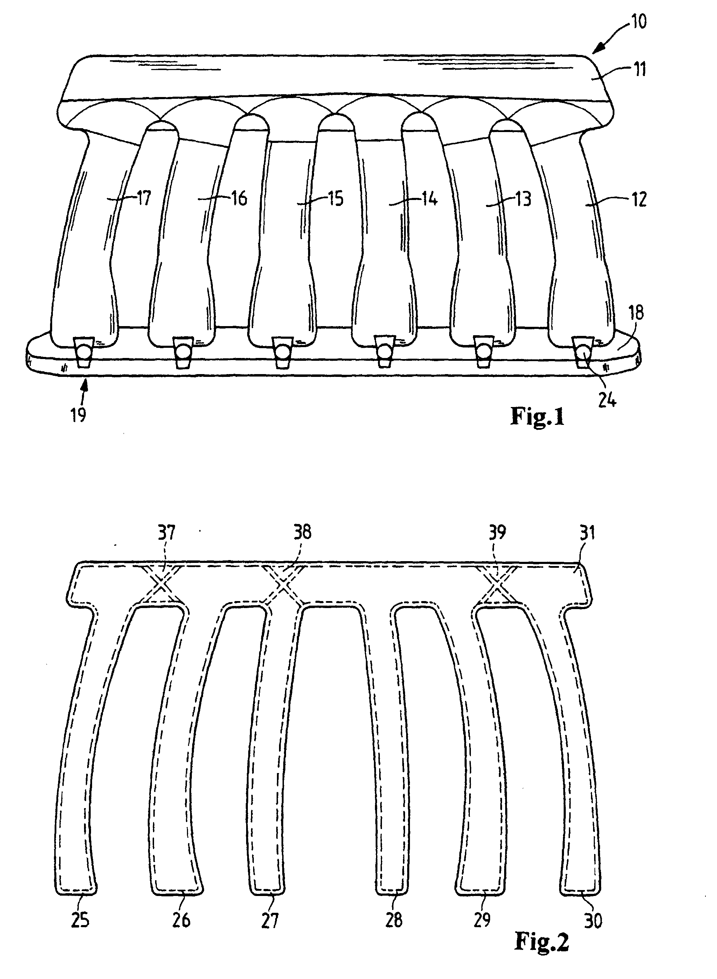

Figur 2 zeigt einen Kern für das in Figur 1 gezeigte Ansaugrohr. Dieser besteht aus sechs Rohren 25, 26, 27, 28, 29, 30, welche in Halbschalentechnik aufgebaut sind sowie einem Sammlerrohr 31. Die Rohre 25 bis 30 sind über Steckverbindungen mit dem Sammelrohr 31 verbunden.

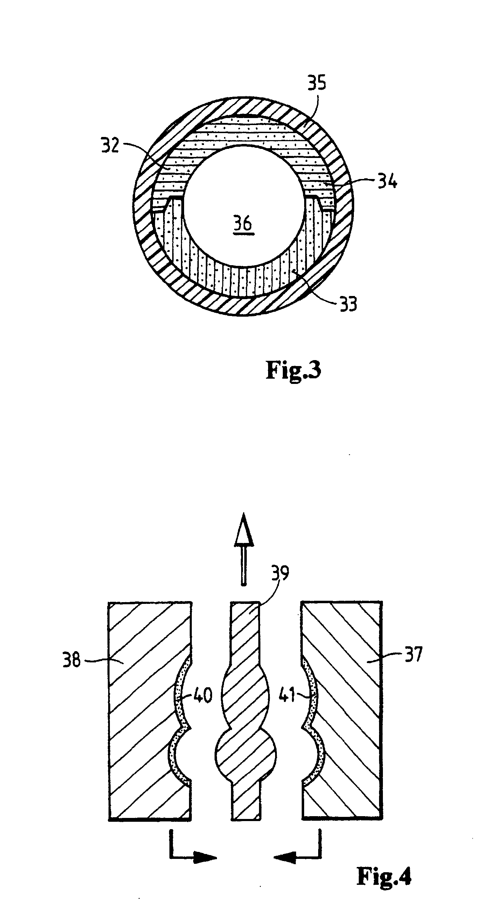

Den Aufbau der Rohre zeigt Figur 3. Diese bestehen aus einer oberen Halbschale 32 und einer unteren Halbschale 33, welche im Verbindungsbereich 34 miteinander verschnappt werden. Die Rohre werden - wie bereits erwähnt - mit thermoplastischem Kunststoff 35 umspritzt. Dieser bildet das Ansaugrohr bzw. die Einzelsaugrohre gemäß Figur 1. Die Halbschalen können je nach Geometrie in einer Kerngießmaschine hergestellt werden, da die Maschinen zweiseitig geöffnet werden können und ein Etagenwerkzeug ohne Zusatzaufwand verwendet werden kann.

Insbesondere besteht die Möglichkeit, den Verpreßvorgang der Halbschalen im Kerngießwerkzeug durchzuführen. Hierzu wird die Mittelplatte 39 des Werkzeugs entfernt und die beiden äußeren Formhälften 37, 38 geschlossen, so daß die Halbschalen 40, 41 ineinandergefügt werden können. Somit kann eine zusätzliche Fügevorrichtung entfallen.

Ein wesentlicher Vorteil bei der Verwendung von Rohren als Kern besteht auch darin, daß beim Ausschmelzen des Kerns die Ausschmelzflüssigkeit in den Kern gelangen kann und damit zu einer rascheren Wärmeübertragung und zu einem schnelleren Ausschmelzen führt.

## Patentansprüche

1. Verfahren zum Herstellen von Körpern aus Kunststoff, bei dem Kerne in Gießformen hergestellt werden, die Kerne in Formen von Spritzgießmaschinen eingelegt, mit Kunststoff ummantelt werden, wobei die Schmelztemperatur des Kunststoffes höher liegt als der Schmelzpunkt der Kerne und wobei die mit Kunststoffummantelten Kerne auf eine Temperatur erhitzt werden, bei der die Kerne schmelzen und bei dem die geschmolzenen Kerne aus den Formen entfernt werden, wobei die Kerne aus Teilschalen (32, 33) bestehen, welche vor dem Umspritzen mit dem Kunststoff(35) zusammengesetzt werden, **dadurch gekennzeichnet, dass** die Teilschalen (32, 33) über einen Hinterschnitt nach Art einer Schnappverbindung (34) gegeneinander fixiert werden.

2. Verfahren nach Anspruch 1, **dadurch gekennzeichnet, daß** die Teilschalen (32, 33) Halbschalen sind, welche einen Hohlraum (36) umschließen.

3. Verfahren nach Anspruch 1 oder 2, **dadurch gekennzeichnet, daß** die Teilschalen (32, 33) miteinander verpreßt oder verquetscht werden.

4. Verfahren nach einem der vorherigen Ansprüche, **dadurch gekennzeichnet, daß** die Teilschalen (32, 33) miteinander verschweißt oder verklebt werden.

5. Verfahren nach einem der vorherigen Ansprüche, **dadurch gekennzeichnet, daß** die Teilschalen (32, 33) nach dem Zusammenfügen mit einem Lack oder einer aushärtbaren Flüssigkeit besprüht oder ummantelt werden.

6. Verfahren nach einem der vorherigen Ansprüche, **dadurch gekennzeichnet, daß** die Teilschalen eine Abstützung durch eine innere Struktur (37, 38, 39) aufweisen.

7. Kern aus schmelzbarem Material zum Bilden eines Hohlraums in einem Kunststoffbauteil, welches im Spritzgießverfahren auf dem Kern aufgebracht wird, **dadurch gekennzeichnet, daß** der Kern (25, 31) aus Teilschalen (32, 33) zusammengesetzt ist und die Teilschalen über einen Hinterschnitt nach Art einer Schnappverbindung gegeneinander fixiert werden.

## Claims

1. Method of producing bodies from plastics material, wherein cores are produced in casting moulds, the cores are inserted into moulds of injection moulding machines and coated with plastics material, the melting temperature of the plastics material being higher than the melting point of the cores, and the cores, coated with plastics material, being heated to a temperature at which the cores melt, and wherein the molten cores are removed from the moulds, the cores comprising partial shells (32, 33) which are fitted together prior to their being extrusion-coated with the plastics material (35), **characterised in that** the partial shells (32, 33) are secured one relative to the other via a recessed portion in the manner of a snap-fitting connection (34).

2. Method according to claim 1, **characterised in that** the partial shells (32, 33) are half-shells which surround a cavity (36).

3. Method according to claim 1 or 2, **characterised in that** the partial shells (32, 33) are pressed or squeezed together.

4. Method according to one of the previous claims, **characterised in that** the partial shells (32, 33) are welded or glued together.

5. Method according to one of the previous claims, **characterised in that** the partial shells (32, 33) are sprayed or coated with a lacquer or a hardenable fluid after being joined together.

6. Method according to one of the previous claims, **characterised in that** the partial shells have a support formed by an internal structure (37, 38, 39).

7. Core, formed from meltable material, for forming a cavity in a plastics material component part which is applied to the core by an injection moulding method, **characterised in that** the core (25, 31) comprises partial shells (32, 33), and the partial shells are secured one relative to the other via a recessed portion in the form of a snap-fitting connection.

## Revendications

1. Procédé de fabrication de corps en matière plastique, selon lequel on fabrique des noyaux dans des moules de coulée, on pose les noyaux dans des moules de machines de coulée par injection, on les enrobe de matière plastique, la température de fusion de la matière plastique étant plus élevée que le point de fusion des noyaux et les noyaux enrobés de matière plastique étant chauffés à une température à laquelle les noyaux fondent, et on retire les noyaux fondus hors des moules, les noyaux étant composés de coquilles partielles (32, 33) assemblées avant l'enrobage de matière plastique (35),
**caractérisé en ce que**
les coquilles partielles (32, 33) sont fixées l'une contre l'autre par une contre-dépouille à la manière d'un enclipsage (34).

2. Procédé selon la revendication 1,
**caractérisé en ce que**
les coquilles partielles (32, 33) sont des demi-coquilles, qui entourent un espace creux (36).

3. Procédé selon la revendication 1 ou 2,
**caractérisé en ce que**
les coquilles partielles (32, 33) sont assemblées l'une à l'autre par pressage ou par serrage.

4. Procédé selon l'une quelconque des revendications précédentes,
**caractérisé en ce que**
les coquilles partielles (32, 33) sont soudées ou collées l'une à l'autre.

5. Procédé selon l'une quelconque des revendications précédentes,
**caractérisé en ce que**
les coquilles partielles (32, 33) sont, après l'assemblage, aspergées ou enrobées d'une laque ou d'un liquide durcissable.

6. Procédé selon l'une quelconque des revendications précédentes,
**caractérisé en ce que**
les coquilles partielles (32, 33) présentent un support formé par une structure interne (37, 38, 39).

7. Noyau en matière fusible pour former un espace creux dans une pièce en matière plastique, apportée sur le noyau par un procédé de coulée par injection,
**caractérisé en ce que**
le noyau (25, 31) est composé de coquilles partielles (32, 33) et les coquilles partielles sont fixées l'une contre l'autre par une contre-dépouille à la manière d'un enclipsage.
